# EUROPÄISCHE PATENTSCHRIFT

(11) **EP 3 659 920 B1**
(45) Veröffentlichungstag und Bekanntmachung des Hinweises auf die Patenterteilung: **10.11.2021**
(21) Anmeldenummer: 19212112.7
(22) Anmeldetag: 28.11.2019
(51) Int. Cl.: B64D 11/06

(54) **MULTIFUNKTIONALE SITZANORDNUNG FÜR EINE PASSAGIERKABINE EINES FAHRZEUGS**
MULTIFUNCTIONAL SEAT ARRANGEMENT FOR A PASSENGER CABIN OF A VEHICLE
AGENCEMENT MULTIFONCTIONNEL DE SIEGES POUR UNE CABINE PASSAGERS DE VEHICULE

(30) Priorität: 29.11.2018 DE 102018130231
(43) Veröffentlichungstag der Anmeldung: 03.06.2020
(73) Patentinhaber: Airbus Operations GmbH, 21129 Hamburg (DE)
(72) Erfinder: Wesseloh, Marc, 21129 Hamburg (DE); Prahl, Sven, 21129 Hamburg (DE); Starke, Frank, 21129 Hamburg (DE)
(74) Vertreter: LKGLOBAL Lorenz & Kopf PartG mbB Patentanwälte

(56) Entgegenhaltungen:
- EP-A1- 1 724 193
- DE-A1-102014 110 819
- US-A- 4 536 027
- US-A1- 2015 336 485
- US-B1- 6 913 227

## Beschreibung

### TECHNISCHES GEBIET

Die Erfindung betrifft eine multifunktionale Sitzanordnung, eine Passagierkabine eines Fahrzeugs sowie ein Fahrzeug mit einer Passagierkabine und mindestens einer darin angeordneten multifunktionalen Sitzanordnung.

### HINTERGRUND DER ERFINDUNG

Passagierkabinen von Fahrzeugen, die dem Transport von Personen dienen, unterliegen stets dem Bedürfnis, den Komfort für Passagiere zu erhöhen, ohne den dafür erforderlichen Bauraum vergrößern zu müssen. Aus wirtschaftlicher Sicht ist weiterhin sinnvoll, die Passagierkapazität ohne Einschränkung des Wohlbefindens der Passagiere zu erhöhen. Für die unterschiedlichsten Fahrzeuge existieren zahlreiche verschiedene Konzepte, unter diesen Gesichtspunkten eine Passagierkabine auszugestalten.

Es ist bekannt, Bereiche in einer Kabine eines Flugzeugs, in denen die Kabinenbreite aufgrund der Form des Flugzeugrumpfs von anderen Bereichen abweicht, anders zu gestalten als in rein zylindrischen Bereichen. Dort werden oftmals schmalere Sitzreihen und abweichende Platzierungen von Passagiersitzen gewählt, ohne den dort vorhandenen Bauraum optimal auszunutzen. Es ist weiterhin bekannt, dort gänzlich andere Einrichtungen unterzubringen. DE 10 2015 102315 A1 schlägt etwa vor, eine Anordnung mit mehreren aneinander reihbaren Kabinenmonumenten mit unterschiedlichen Bautiefen einzusetzen, so dass eine gangseitig geschlossene Front entsteht. In DE 10 2010 035 375 A1 hingegen wird vorgeschlagen, an derartigen Bereichen zusätzlich zu Passagiersitzen auch ein lateral außen an einer Kabinenwand angeordnetes Staufach einzusetzen.

US6913227 B1 offenbart eine Multifunktionale Sitzanordnung für eine Passagierkabine eines Fahrzeugs, aufweisend: mindestens einen ersten Sitz und einen zweiten Sitz, der lateral direkt neben dem mindestens einen ersten Sitz angeordnet ist, wobei der mindestens eine erste Sitz eine erste Sitzfläche und eine erste Rückenlehne aufweist, wobei der zweite Sitz eine zweite Sitzfläche und eine zweite Rückenlehne aufweist, wobei die erste Sitzfläche und die zweite Sitzfläche dieselbe Sitzhöhe aufweisen, wobei der zweite Sitz eine geringere Breite aufweist als der mindestens eine erste Sitz.

### ZUSAMMENFASSUNG DER ERFINDUNG

Die im Stand der Technik vorgeschlagenen Ausgestaltungen einer Kabine können bestimmte Funktionen bieten, allerdings sind diese jeweils auf eine Funktionsweise beschränkt. Es wäre wünschenswert, neben der reinen Ausnutzung eines vorhandenen Bauraums auch gänzlich unterschiedliche Funktionen bereitstellen zu können, ohne diese bei der Ausstattung der Kabine auswählen zu müssen.

Es ist eine Aufgabe der Erfindung, eine Sitzanordnung für eine Passagierkabine eines Fahrzeugs vorzuschlagen, mit deren Hilfe vormals eingeschränkt nutzbare Kabinenbereiche zur Erhöhung des Komforts und zur Erhöhung der Passagierkapazität besser nutzbar gemacht werden können.

Diese Aufgabe wird durch eine Sitzanordnung mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird eine multifunktionale Sitzanordnung für eine Passagierkabine eines Fahrzeugs vorgeschlagen, aufweisend mindestens einen ersten Sitz und einen zweiten Sitz, der lateral direkt neben dem mindestens einen ersten Sitz angeordnet ist, wobei der mindestens eine erste Sitz eine erste Sitzfläche und eine erste Rückenlehne aufweist, wobei der zweite Sitz eine zweite Sitzfläche, eine zweite Rückenlehne und eine schwenkbar an der zweiten Sitzfläche gelagerte, von der zweiten Rückenlehne entgegengesetzt angeordnete Sitzflächenverlängerung aufweist, wobei die Sitzflächenverlängerung zumindest dazu ausgebildet ist, in eine zu der Sitzfläche einen Winkel von mindestens 90° einschließende Position verschwenkt zu werden, wobei die erste Sitzfläche und die zweite Sitzfläche dieselbe Sitzhöhe aufweisen und wobei der zweite Sitz eine geringere Breite aufweist als der mindestens eine erste Sitz.

Der mindestens eine erste Sitz ist insbesondere ein herkömmlicher Passagiersitz, der für das Fahrzeug übliche Abmessungen besitzt. Befindet sich die Sitzanordnung in einer Passagierkabine mit einer Vielzahl von Passagiersitzen, entspricht der erste Sitz bevorzugt der Ausführung des Großteils der in der Passagierkabine angeordneten Sitze oder des Großteils der in der selben Klasse angeordneten Sitze. An dieser Stelle kann keine genauere Einschränkung der Ausführung des mindestens einen ersten Sitzes gemacht werden, da für unterschiedliche Fahrzeuge, unterschiedliche Kabinenklassen, unterschiedliche Kabinenausstatter und dergleichen die Abmessungen und Ausführungen variieren können. Der mindestens eine erste Sitz sollte folglich als ein (gewöhnlicher) Passagiersitz angesehen werden.

Der zweite Sitz, der lateral direkt neben dem mindestens einen ersten Sitz angeordnet ist, ist indes kein herkömmlicher Passagiersitz, sondern weicht hiervon ab. Zunächst ist die Breite des zweiten Sitzes geringer als die des ersten Sitzes. Dadurch ist die Sitzanordnung beispielsweise dazu geeignet, in einem sich verjüngen Kabinenbereich angeordnet zu werden, der etwa in einem Verkehrsflugzeug in einem Heckbereich vorzufinden ist. Da eine Innenverkleidung der Passagierkabine der Rumpfform des Verkehrsflugzeugs folgt und ein Flugzeugrumpf an einem Heck üblicherweise eine Konusform besitzt, sinkt folglich die Kabinenbreite in dem Heckbereich der Passagierkabine. Durch die allgemeine Krümmung des Flugzeugrumpfs ist die Anordnung des zweiten Sitzes nur dann zwischen einer Innenverkleidung der Kabine und einem ersten Sitz möglich, wenn die Breite des zweiten Sitzes angepasst ist.

Zudem weist der zweite Sitz eine Sitzflächenverlängerung auf, die schwenkbar an der zweiten Sitzfläche gelagert ist. Diese erlaubt eine bedarfsweise Modifikation des zweiten Sitzes, sodass dieser unterschiedliche Funktionen aufweisen kann. Die Sitzflächenverlängerung könnte in unterschiedlichen Schwenkwinkeln zu der zweiten Sitzfläche positioniert werden. Dies könnte etwa das Aufschwenken der Sitzflächenverlängerung auf die zweite Sitzfläche erlauben. Dadurch könnte die Höhe der zweiten Sitzfläche um die Dicke der Sitzflächenverlängerung vergrößert werden. Dadurch könnte beispielsweise ein Kind auf dem zweiten Sitz Platz nehmen und findet dort eine komfortable Sitzhöhe vor. Eine separat mitzuführende Sitzerhöhung wäre dann nicht erforderlich. Aufgrund der niedrigeren zweiten Rückenlehne wird das Kind in seinem persönlichen Sitzkomfort zudem nicht eingeschränkt. In diesem Anwendungsfall wäre es folglich nicht notwendig, einen vollwertigen Passagiersitz für das Kind einzusetzen, sodass der zweite Sitz zu einem zusätzlich buchbaren Sitzplatz führt.

Andererseits könnte durch das Aufschwenken der Sitzflächenverlängerung auf die zweite Sitzfläche eine besonders komfortable Ablage für den Passagier auf dem direkt benachbarten ersten Sitz geschaffen werden. Hier kann etwa ein Tablett abgelegt werden oder es wird ein zusätzlicher Arbeitsbereich für den Passagier geschaffen. Eine an einem Vordersitz angeordnete, klappbare Ablagefläche müsste folglich nicht durch Arbeitsutensilien eingenommen werden. Beim Empfang von Mahlzeiten muss der Passagier folglich die Ablagefläche nicht abräumen und die Utensilien auf den Schoß nehmen oder in einer Tasche ablegen. Sollte die Ablagefläche dennoch verwendet werden, könnten die dort abgelegten Arbeitsutensilien einfach auf die Ablagefläche der Sitzflächenverlängerung geräumt werden.

Aufgrund der identischen Sitzhöhen der ersten Sitzfläche und der zweiten Sitzfläche ist weiterhin die Möglichkeit gegeben, bei heruntergeklappter Sitzflächenvergrößerung die zweite Sitzfläche mit der direkt benachbarten ersten Sitzfläche zu kombinieren, sodass größere und/oder übergewichtige Personen bequem sitzen können. Direkt benachbarte Passagiere werden in ihrem persönlichen Komfort daher nicht eingeschränkt. Da der zweite Sitz nur teilweise eingenommen wird, kann die zu einer Innenverkleidung gerichtete Schulter des betreffenden Passagiers bequem Platz finden.

Zusätzlich dazu könnte durch die Sitzflächenverlängerung bei Einnahme einer geeigneten Schwenkposition auch ein Schlafplatz für ein Baby bereitgestellt werden, sodass auf dem zweiten Sitzplatz beispielsweise eine Art Wanne oder Bettchen bereitstellbar ist, ohne auf eine an einer Trennwand oder einem Monument aufgehängte Wanne angewiesen zu sein. Dies ist zudem sehr bequem, da ein Elternteil auf dem direkt benachbarten ersten Sitz sitzen kann und eine sehr vorteilhafte Position zu dem Baby einnimmt, was das Wohlbefinden dieser beiden Passagiere im Vergleich zu der Situation bei Verwendung einer herkömmlichen Babywanne deutlich verbessert, da ein direkter Blickkontakt nicht behindert wird.

Zusammenfassend erlaubt die erfindungsgemäße Sitzanordnung einen deutlichen Komfortgewinn durch die Vielzahl an unterschiedlichen Anwendungen, es wird zudem kein zusätzlicher Bauraum in einer Passagierkabine beansprucht, der dann für andere Anwendungen oder Funktionen entfallen würde. Gleichzeitig kann in bestimmten Fällen die Passagierkapazität der Kabine erhöht werden und zusätzliche buchbare Optionen bereitstellen. Der zweite Sitz grenzt dabei direkt an eine Kabinenwand, d.h. eine Kabineninnenverkleidung an.

Erfindungsgemäß ist die Sitzflächenverlängerung in mehreren Schwenkpositionen lösbar verriegelbar. Dadurch kann die Position der Sitzflächenverlängerung in bestimmten Schwenkwinkeln arretiert werden. Die Schwenkwinkel sind jeweils an die gewünschten Funktionsarten des zweiten Sitzes anzupassen. In einem ersten Schwenkwinkel könnte etwa die Sitzflächenverlängerung zu einem Fußboden gerichtet und folglich etwa vertikal zu dem Fußboden verlaufen. Ein zweiter Schwenkwinkel könnte derart ausgebildet sein, dass die Sitzflächenverlängerung parallel zu der zweiten Sitzfläche verläuft. Ein dritter denkbarer Schwenkwinkel könnte etwa einen Winkel von etwas mehr als 90° zu der zweiten Sitzfläche einschließen, sodass eine bequeme Begrenzung zwischen der zweiten Rückenlehne und der Sitzflächenverlängerung vorliegt. Falls gewünscht, könnte eine Verriegelung der Sitzflächenverlängerung an einem vierten Schwenkwinkel stattfinden, in dem die Sitzflächenverlängerung auf der zweiten Sitzfläche aufliegt. Dies ist jedoch nicht unbedingt erforderlich. Die Verriegelung könnte durch einen in den zweiten Sitz integrierten Mechanismus realisiert sein. Dieser könnte etwa durch Betätigen der Sitzflächenverlängerung selbst bedient werden. Die Sitzflächenverlängerung könnte etwa beim Verschwenken in den vorbestimmten, zu den genannten Schwenkwinkeln zugehörigen Positionen selbsttätig einrasten und durch ein Betätigen eines Handhabungselements oder durch ein weiteres Aufschwenken wieder gelöst werden.

Bevorzugt ist die zweite Rückenlehne und/oder die zweite Sitzflächenverlängerung dazu ausgebildet, bündig auf die zweite Sitzfläche geklappt zu werden. Die zweite Rückenlehne und/oder die Sitzflächenverlängerung kann insbesondere zum Wahrnehmen einer Ablagefunktion auf die zweite Sitzfläche geschwenkt werden. Abhängig von dem vorhandenen Bauraum und insbesondere dem Sitzabstand zum Vordersitz, kann sich die zweite Rückenlehne über eine größere Fläche erstrecken, als die Sitzflächenverlängerung. Durch das Verschwenken der zweiten Rückenlehne auf die zweite Sitzfläche kann folglich eine größere Ablagefläche bereitgestellt werden, als mit der Sitzflächenverlängerung. In dieser Position kann ein Passagier insbesondere Arbeitsutensilien ablegen bzw. benutzen.

Bevorzugt weist die zweite Rückenlehne bzw. die Sitzflächenverlängerung an einer Rückseite eine ebene Auflagefläche mit einer rutschhemmenden Beschichtung auf. Die ebene Auflagefläche lässt sich folglich auch durch kleinere Gegenstände gut ausnutzen, die unterstützt durch die rutschhemmende Beschichtung nicht von der Auflagefläche herunterrutschen. Die Auflagefläche könnte insbesondere hart und leicht zu reinigend ausgeführt sein. Optional kann ein randseitig umlaufender Vorsprung vorgesehen sein, um ein Herabrutschen oder Herunterrollen von Gegenständen zu vermeiden.

Besonders bevorzugt weist die zweite Rückenlehne bzw. die Sitzflächenverlängerung an einer Rückseite mindestens eine Vertiefung zur Aufnahme eines Gegenstands auf. Eine solche Vertiefung könnte auf unterschiedliche Arten ausgeführt sein. Es ist denkbar, einen Becherhalter einzusetzen, in den ein Passagier einen Getränkebehälter stellen und gegebenenfalls arretieren kann. Es sind überdies auch etwas flachere Vertiefungen vorstellbar, in die mobile Endgeräte, beispielsweise ein Mobiltelefon, ein Tablet PC, ein Notebook oder ähnliches, abgelegt werden können. Durch eine flache Vertiefung kann ein Gegenstand vor dem Verrutschen gesichert werden. Insbesondere könnte eine Vertiefung wannenförmig ausgebildet sein.

In einer vorteilhaften Ausführungsform kann die zweite Rückenlehne an einer Rückseite mindestens eine mit einem mobilen Endgerät koppelbare elektronische Einrichtung aufweisen. Insbesondere induktive Ladegeräte oder Ladeanschlüsse oder herkömmliche Steckdosen, die mit einem Wandler gekoppelt sind, für mobile Endgeräte sind denkbar. Diese können gegebenenfalls eine Leistung bereitstellen, die für eine Schnellladung eines Notebooks oder ähnlicher Geräte ausreicht. Weiterhin sind Komponenten wie Tastaturen oder andere Bedienelemente denkbar, die über Kurzstreckenfunk, zum Beispiel Bluetooth, mit mobilen Endgeräten eines Passagiers koppelbar sind.

Bevorzugt ist eine klappbar gelagerte Armlehne an dem zweiten Sitz und/oder an dem direkt benachbarten ersten Sitz integriert, wobei die Armlehne dazu ausgebildet ist, bündig in eine Kontur der zweiten Rückenlehne und/oder der ersten Rückenlehne des direkt benachbarten ersten Sitzes geklappt zu werden. Die Armlehne kann etwa so ausgebildet sein, dass sie zwischen eine Trennfuge der beiden benachbarten Rückenlehnen eintaucht und dabei eine vollständig geschlossene Rückenlehne bereitstellt, die aus einer ersten Rückenlehne und der zweiten Rückenlehne besteht. Bei Verwendung des zweiten Sitzes und des direkt benachbarten ersten Sitzes durch einen einzigen Passagier wird das Wohlbefinden des Passagiers durch eine störende Armlehne nicht eingeschränkt. Auch bei Verwendung des zweiten Sitzes durch ein Kind und insbesondere ein Baby kann ein Anstoßen einer hochgeklappten Armlehne verhindert werden.

Der zweite Sitz könnte weiterhin eine Befestigungseinrichtung zum Haltern eines zusätzlichen Kindersitzes aufweisen, der auf die zweite Sitzfläche auflegbar ist. Ein Kindersitz wird damit mechanisch direkt mit dem zweiten Sitz verbunden, sodass er sicher gehalten wird. Durch Einsatz eines dem Kind bereits vertrauten und größenmäßig angepassten Sitzes kann dessen Wohlbefinden sowie Sicherheit gesteigert werden.

Die zweite Rückenlehne könnte niedriger als die erste Rückenlehne sein. Damit können auch Bereiche eine Passagierkabine besser ausgenutzt werden, die keinen Bauraum für einen zusätzlichen Sitz mit einer herkömmlichen Höhe einer Rückenlehne bieten. Ein etwas schmalerer zweiter Sitz, der zudem eine etwas kürzere Rückenlehne aufweist, könnte für eine Ablagefunktion und zur Verwendung durch ein Kind vollkommen ausreichen.

Bevorzugt weist der zweite Sitz einen Gurt auf, der mit einem Gurt des direkt benachbarten ersten Sitzes verbindbar ist. Dadurch wird erlaubt, beide Sitze von einem einzelnen Passagier zu benutzen und beide Gurte miteinander zu verbinden, so dass sich der daraus resultierende Gurt über beide Sitze erstreckt.

Besonders bevorzugt schließen der zweite Sitz und der direkt benachbarte erste Sitz keine Lücke zueinander ein. Sowohl die gemeinsame Nutzung der beiden Sitze wird dadurch begünstigt, als auch die Verwendung des zweiten Sitzes für ein Baby oder Kleinkind, da die Oberfläche der Anordnung der beiden Sitze homogen ist und kein Verletzungspotential bietet.

Die Erfindung betrifft ferner eine Passagierkabine, die einen Fußboden, eine Kabineninnenverkleidung, mehrere Passagiersitze, die auf dem Fußboden angeordnet sind und mindestens eine Sitzanordnung mit den vorangehend genannten Merkmalen aufweist.

Die Erfindung betrifft ferner ein Flugzeug, das einen Flugzeugrumpf und eine darin ausgebildete Passagierkabine wie vorangehend genannt aufweist. Die Sitzanordnung könnte an jeder beliebigen Stelle in der Passagierkabine angeordnet sein. Neben den vorangehend genannten Bereichen eines sich verjüngenden Flugzeugrumpfs ist auch vorstellbar, die Sitzanordnung über ganze Längsabschnitte der Passagierkabine anzuordnen oder sogar über die gesamte Länge der Passagierkabine.

Das Flugzeug könnte an zumindest einem axialen Ende des Flugzeugrumpfs zumindest bereichsweise eine Konusform aufweisen, wobei die mindestens eine Sitzanordnung an dem betreffenden axialen Ende angeordnet ist. Die Konusform kann insbesondere in einem Heckbereich vorliegen. Üblicherweise erstrecken sich die Passagiersitze gleichmäßig verteilt seitlich von Gängen entlang einer Längsachse und einer Querachse. Im Bereich der Konusform sinkt die einnehmbare Kabinenbreite stetig, sodass die Anzahl der in Querrichtung nebeneinander angeordneten Sitze zumindest einmal um einen Sitz reduziert werden muss. Zwischen der Kabineninnenverkleidung und dem lateral äußersten Sitz kann folglich ein etwa trapezförmiger Bereich vorliegen, in den ein zweiter Sitz mit einer etwas geringeren Breite und/oder mit einer etwas kürzeren zweiten Rückenlehne integrierbar ist. Die Konusform beschränkt sich jedoch nicht auf den Heckbereich, sondern könnte auch in einem Bugbereich vorzufinden sein.

Die Sitzanordnung könnte sich von einem Gang zu der Kabineninnenverkleidung erstrecken, wobei der zu dem Gang gerichtete erste Sitz bündig mit dem Gang abschließt. Ein Querversatz von Sitzen zum Ausfüllen einer Lücke zu der Kabineninnenverkleidung bei reduzierter Sitzanzahl ist durch Integration des zweiten Sitzes nicht erforderlich. Damit kann eine sehr harmonisch gestaltete Kabine bereitgestellt werden.

In einer weiteren Ausführungsform weist die Passagierkabine zwischen zwei Gängen mindestens eine Sitzreihe auf, die mindestens eine Sitzanordnung besitzt. Diese Sitzreihe kann eine Zwischenreihe sein, die in Längsrichtung an eine Sitzreihe angrenzt, welche ausschließlich erste Sitze aufweist. Die Breite der angrenzenden Sitzreihe kann abhängig von ihrer Relativposition größer oder kleiner sein. Ist die Zwischenreihe in einem Heckbereich einer Passagierkabine angeordnet, kann eine in Längsrichtung davor befindliche Sitzreihe eine größere Breite aufweisen und ausschließlich erste Sitze besitzen. Die Anzahl der ersten Sitze der davor befindlichen Sitzreihe kann um 1 größer sein als die Anzahl der ersten Sitze der Zwischenreihe. Eine in Längsrichtung dahinter liegende Sitzreihe kann eine geringere Breite aufweisen und lediglich erste Sitze besitzen. Die Anzahl der ersten Sitze der dahinter liegenden Sitzreihe kann mit der Anzahl der ersten Sitze der Zwischenreihe identisch sein, es würde dann lediglich der zweite Sitz fehlen. Die Zwischenreihe kann folglich einen Übergang zwischen zwei Sitzreihen schaffen, die sich in ihrer Anzahl erster Sitze unterscheiden.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 bis 6 zeigen eine Sitzanordnung in unterschiedlichen Konfigurationen in einer dreidimensionalen Ansicht.
Fig. 7a und 7b zeigen den zweiten Sitz in einer Seitenansicht in mehreren unterschiedlichen Konfigurationen.
Fig. 8 zeigt die Rückenlehnen eines ersten Sitzes und des zweiten Sitzes in einer Vorderansicht.
Fig. 9 zeigt eine Draufsicht auf die Rückseite der zweiten Rückenlehne.
Fig. 10 zeigt eine Einbausituation eines ersten Sitzes und des zweiten Sitzes in einer Vorderansicht.
Fig. 11 zeigt einen Heckkonus eines Flugzeugrumpfs in einer geschnittenen Draufsicht.
Fig. 12 zeigt eine etwas modifizierte Fassung der Darstellung aus Fig. 11.
Fig. 13 zeigt eine weiter modifizierte Darstellung auf Basis von Fig. 11.
Fig. 14 zeigt ein Flugzeug in einer räumlichen Darstellung.

### DETAILLIERTE DARSTELLUNG EXEMPLARISCHER AUSFÜHRUNGSFORMEN

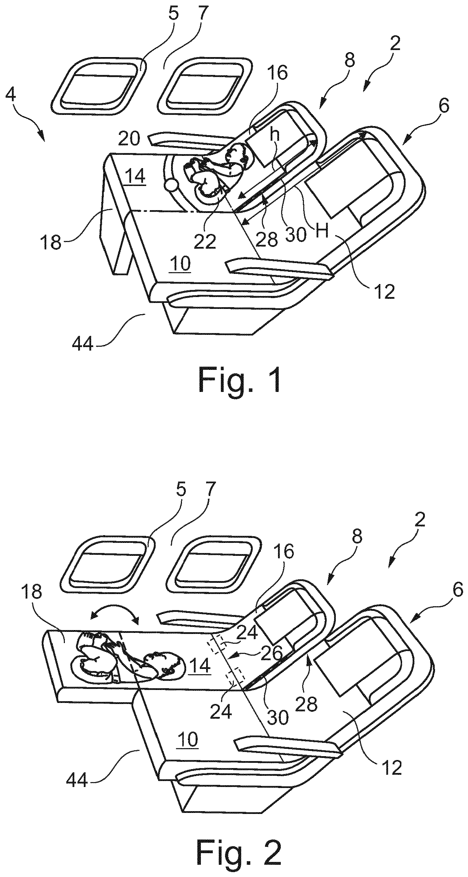

Fig. 1 zeigt eine multifunktionale Sitzanordnung 2 für eine Passagierkabine 4 eines Fahrzeugs. Die Sitzanordnung 2 weist in dem gezeigten Ausführungsbeispiel einen ersten Sitz 6 und einen zweiten Sitz 8 auf, der lateral direkt neben dem ersten Sitz 6 angeordnet ist. Der zweite Sitz 8 schließt direkt an eine Kabineninnenverkleidung 7 an und folglich zu einem Kabinenfenster 5 gerichtet.

Der erste Sitz 6 besitzt eine erste Sitzfläche 10 sowie eine erste Rückenlehne 12. Analog dazu weist der zweite Sitz 8 eine zweite Sitzfläche 14 und eine zweite Rückenlehne 16 auf. Zusätzlich dazu ist eine Sitzflächenverlängerung 18 schwenkbar an einer zu der zweiten Rückenlehne 16 entgegengesetzten Seite der zweiten Sitzfläche 14 gelagert. Die zweite Rückenlehne 16 weist eine geringere Höhe h als die erste Rückenlehne 12 auf, deren Höhe mit H gekennzeichnet ist. Weiterhin ist ersichtlich, dass der zweite Sitz 8 eine geringere Breite aufweist als der erste Sitz 6.

Der zweite Sitz 8 kann mit einem Sitzgurt 20 ausgestattet sein, der insbesondere für Kleinkinder angepasst ist. Hierdurch wird eine optimale Rückhaltung eines Kindes erlaubt, indem sich der Sitzgurt 20 passend an die Hüftknochen anschmiegen kann. Durch die geringere Höhe h der zweiten Rückenlehne 16 wird auch für Kleinkinder eine bequeme Stützung des Rückens und der Schulter ermöglicht.

Die Darstellung in Fig. 1 zeigt schematisch ein Baby 22, das sich auf der zweiten Sitzfläche 14 befindet. In dieser Position könnte etwa das Wechseln einer Windel erfolgen oder in dieser Position könnte ein zusätzlicher Kindersitz (nicht gezeigt) an den zweiten Sitz 8 angeordnet werden. Um eine größere Liegefläche bereitstellen zu können, kann die Sitzflächenverlängerung 18 aufgeschwenkt werden.

In Fig. 2 ist die Sitzflächenverlängerung 18 mit aufgeschwenkter Sitzflächenverlängerung 18, die parallel zu der zweiten Sitzfläche 14 verläuft, gezeigt. Der zwischen der zweiten Sitzfläche 14 und der Sitzflächenverlängerung 18 eingeschlossene Winkel beträgt etwa 180°. Die zweite Sitzfläche 14 und die Sitzflächenverlängerung 18 stellen folglich eine relativ große Fläche bereit, die einem Baby oder Kleinkind zum Schlafen dienen könnte. Bevorzugt ist die Sitzflächenverlängerung 18 an dieser Seite besonders weich, sodass ein bequemes Liegen möglich ist.

Insbesondere bei sehr kleinen Kindern könnte sich anbieten, auch hier eine zusätzliche Wanne oder einen flachen Liegesitz anzuordnen und insbesondere mit dem Sitzgurt 20 an dem zweiten Sitz 8 zu befestigen. Alternativ oder zusätzlich dazu können auch Befestigungseinrichtungen 24 an einem Übergangsbereich zwischen der zweiten Sitzlehne 16 und der zweiten Sitzfläche 14 angeordnet sein, die zum Fixieren eines zusätzlichen Baby- oder Kindersitzes dienen. Diese können ähnlich wie in einem Kraftfahrzeug ausgestaltet verdeckt in einer Trennfuge 26 angeordnet sein.

Anhand der Figuren 1 und 2 wird zudem deutlich, dass beide Sitzflächen 10 und 14 dieselbe Höhe aufweisen und beide Rückenlehnen 12 und 16 bündig nebeneinander angeordnet sind. Es ist vorstellbar, dass die zweite Rückenlehne 16 stets parallel zu der ersten Rückenlehne 12 angeordnet ist, so dass sich beide Rückenlehnen 12 und 16 wie eine einzige Rückenlehne verhalten. Es ist allerdings auch vorstellbar, dass die zweite Rückenlehne 16 in diesen Konfigurationen stets in der hier gezeigten Position verbleibt und nicht weiter nach hinten geschwenkt werden kann.

In einer weiteren Trennfuge 28, die zwischen den beiden Rückenlehnen 12 und 16 verläuft, ist eine schwenkbar gelagerte Armlehne 30 angeordnet. Diese ist in den Ausführungsbeispielen so ausgebildet, dass sie vollständig in der Trennfuge 28 verschwindet, sobald sie zu den Rückenlehnen 12 und 16 hin verschwenkt wird. Einer Ausgestaltung beider Rückenlehnen 12 und 16 als eine zusammenhängende Rückenlehne steht folglich nichts entgegen.

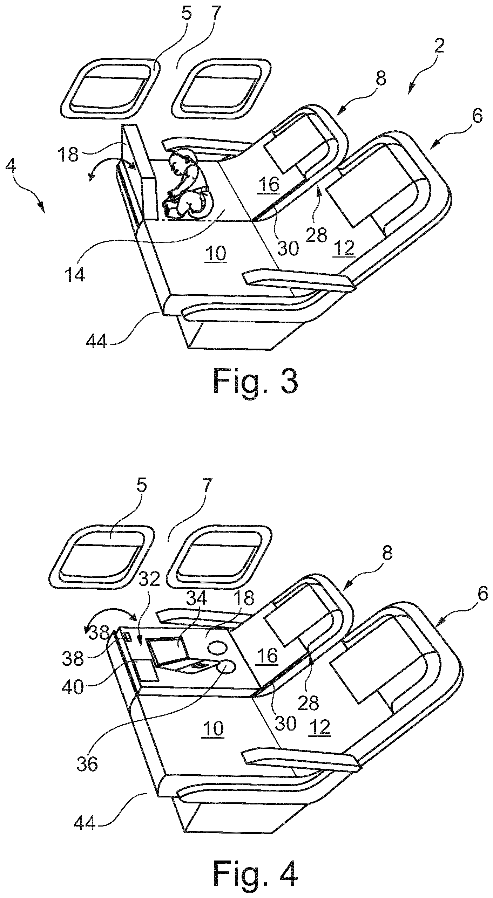

Fig. 3 zeigt eine weitere mögliche Position der Sitzflächenverlängerung 18. Hier schließen die zweite Sitzfläche 14 und die Sitzflächenverlängerung 18 einen Winkel von ungefähr 100° ein. Befindet sich ein Elternteil des Babys 22 auf dem ersten Sitz 6, ist das Baby zwischen der Kabineninnenverkleidung 7, der zweiten Rückenlehne 16, der Sitzflächenverlängerung 18 und dem Elternteil vollständig vor dem Herausfallen geschützt. In einer solchen Position ist ein ungestörtes Schlafen möglich.

In einer anderen Konfiguration, welche in Fig. 4 gezeigt ist, ist die Sitzflächenverlängerung 18 vollständig auf die zweite Sitzfläche 14 geklappt, so dass sie bündig auf dieser aufliegt. Bevorzugt weist die Sitzflächenverlängerung eine ebene und rutschfest beschichtete Rückseite 32 auf. Ein Benutzer, der sich auf dem ersten Sitz 6 befindet, kann hier persönliche Dinge ablegen, wie etwa ein Notebook 34 und Papierdokumente. Die Rückseite 32 kann ferner Becherhalter 36 oder andere Vertiefungen aufweisen, die einem Benutzer das sichere Abstellen von Getränkebehältern oder anderen Gegenständen erlaubt. Dies ist besonders bequem, da die Höhe der Rückseite 32 größer ist als die Höhe der ersten Sitzfläche 10 und folglich die abgelegten Gegenstände besser erreichbar sind. Des Weiteren kann die Rückseite 32 mit Stromanschlüssen 38 ausgestattet sein, die einem Benutzer das Aufladen von mobilen Endgeräten erlauben. Neben proprietären Schnittstellen, herkömmlichen Steckdosen und Anschlüssen zur Schnellladung von Notebooks oder ähnlicher größerer Geräte sind auch Anschlüsse mit niedrigen Gleichspannungen geringer Leistung, wie etwa USB, denkbar. Zusätzlich oder alternativ dazu sind auch induktive Ladeeinrichtungen 40 in die Rückseite 32 integrierbar und können durch einen entsprechenden aufgedruckten Hinweis markiert werden. Da üblicherweise in einem Passagiersitz elektrische Einrichtungen vorhanden sind, ist die Ausstattung der Sitzflächenverlängerung 18 mit diesen Komponenten ohne weiteres denkbar.

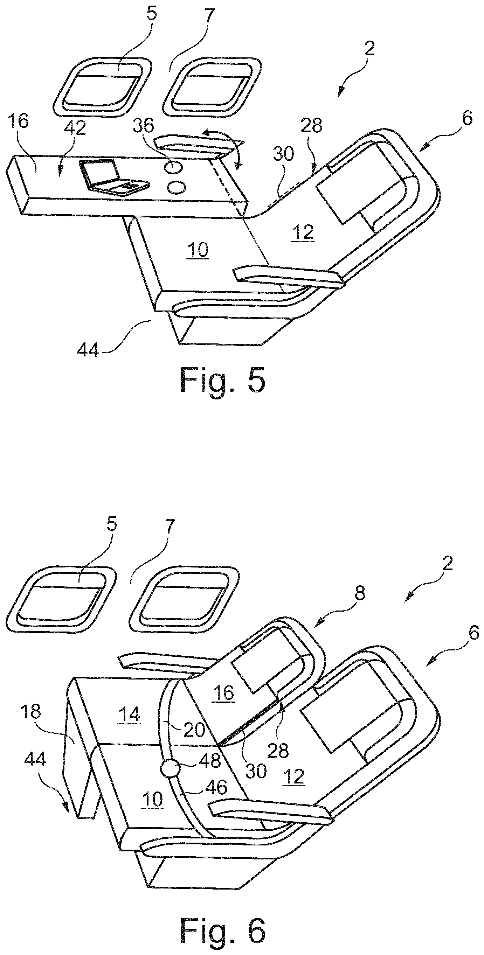

In Fig. 5 wird eine alternative oder zusätzliche Variante dargestellt. Hier ist die zweite Rückenlehne 16 vollständig auf die zweite Sitzfläche 14 schwenkbar. Zum Ablegen von Gegenständen ist eine Rückseite 42 der zweiten Rückenlehne 16 mit einer rutschhemmenden Oberfläche ausgestattet, die weiterhin bevorzugt vollständig eben ist. Auch hier könnten Becherhalter 36 oder andere Vertiefungen vorgesehen sein, die etwas näher in einer weiter nachfolgenden Figur dargestellt werden

In Fig. 6 ist eine weitere Konfiguration gezeigt, bei der die Sitzflächenverlängerung 18 von der zweiten Sitzfläche 14 aus zu einem Kabinenfußboden 44 gewandt ist. Die Armlehne 30 befindet sich in der hochgeklappten Stellung und ein Sitzgurt 46 des ersten Sitzes 6 ist mit dem Sitzgurt 20 des zweiten Sitzes 8 über ein Gurtschloss 48 verbunden. Hierzu weist insbesondere der zweite Sitz 8 ein Gurtschloss 48 auf. Der dadurch gebildete längere Sitzgurt erstreckt sich über beide Sitzflächen 10.

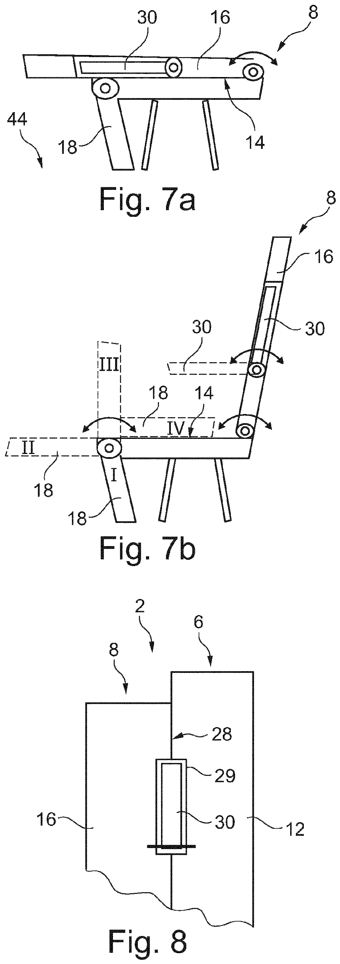

Die Figuren 7a und 7b zeigen noch einmal die verschiedenen Konfigurationen des zweiten Sitzes 8 in einer Seitenansicht. Während in Fig. 7a die zweite Rückenlehne 16 gezeigt ist, die auf der zweiten Sitzfläche 14 aufliegt, während die Sitzflächenverlängerung 18 zu dem Kabinenfußboden 44 gewandt ist, zeigt Fig. 7b die möglichen Stellungen der Sitzflächenverlängerung 18 bei hochgeklappter zweiter Rückenlehne 16. Die mit I gekennzeichnete Stellung der Sitzflächenverlängerung 18 repräsentiert einen herkömmlichen Sitzmodus insbesondere für einen Erwachsenen oder bei Verwendung der zweiten Rückenlehne 16 als Ablage. In der Stellung II ist die Sitzflächenverlängerung 18 parallel zu der zweiten Sitzfläche 14 angeordnet und kann zum Wickeln eines Babys 22 oder als Liegefläche für ein Baby oder ein Kleinkind eingesetzt werden. Die Stellung III steht für die in Fig. 3 gezeigte Konfiguration, bei der ein Baby 22 sicher vor dem Herunterfallen geschützt ist. Die Stellung IV erlaubt die Verwendung der Sitzflächenverlängerung 18 als Ablage.

Fig. 8 demonstriert in einer Draufsicht die Größenverhältnisse der beiden Rückenlehnen 12 und 16 sowie eine Anordnung der Armlehne 30, die in der Trennfuge 28 verschwindet, wenn sie hochgeklappt wird. In oder hinter der Trennfuge 28 könnte ein Ausschnitt 29 vorliegen, der zur Aufnahme der Armlehne 30 dimensioniert ist. Der Ausschnitt 29 kann sich lateral in beide benachbarten Rückenlehnen 12 und 16 erstrecken.

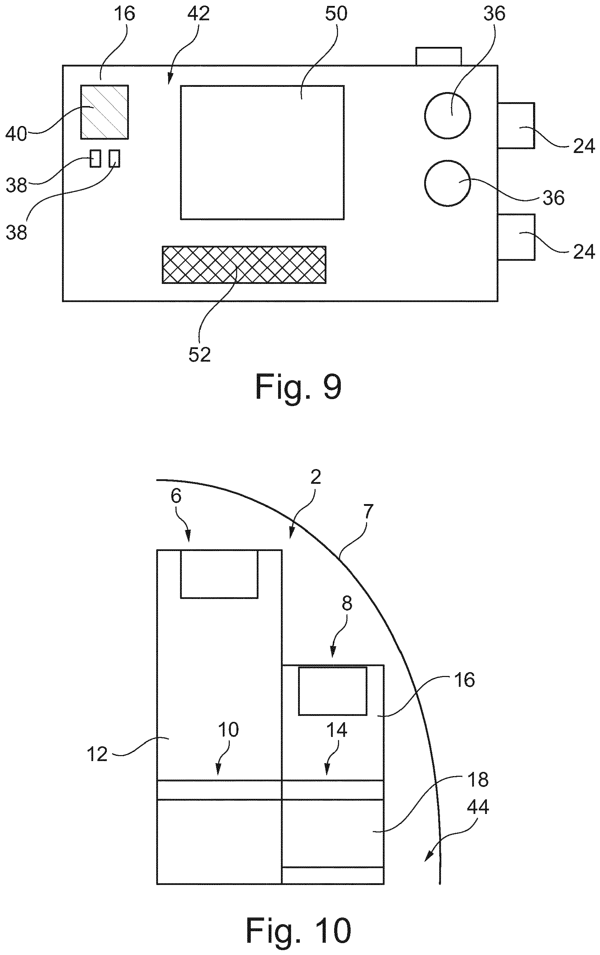

Fig. 9 zeigt die Rückseite 42 der zweiten Rückenlehne 16, in der neben den Becherhaltern 36 auch eine wannenförmige Vertiefung 50 angeordnet ist, um beispielsweise ein mobiles Endgerät vor dem Herunterrutschen zu sichern. Beispielhaft ist ein Eingabegerät 52 in der Rückseite 42 angeordnet und könnte drahtlos mit einem mobilen Endgerät verbunden werden. Beispielhaft ist hier eine Funktastatur 52 angedeutet.

Fig. 10 zeigt die beiden Rückenlehnen 12 und 16 in einem Größenvergleich direkt neben der Kabineninnenverkleidung 7. Hier wird deutlich, dass der verfügbare Bauraum zwischen dem ersten Sitz 6 und der Kabineninnenverkleidung 7 sehr gut durch den zweiten Sitz 8 ausgenutzt wird und die zweite Rückenlehne 16 aufgrund ihrer reduzierten Höhe sehr gut in den verfügbaren Bauraum eingepasst ist.

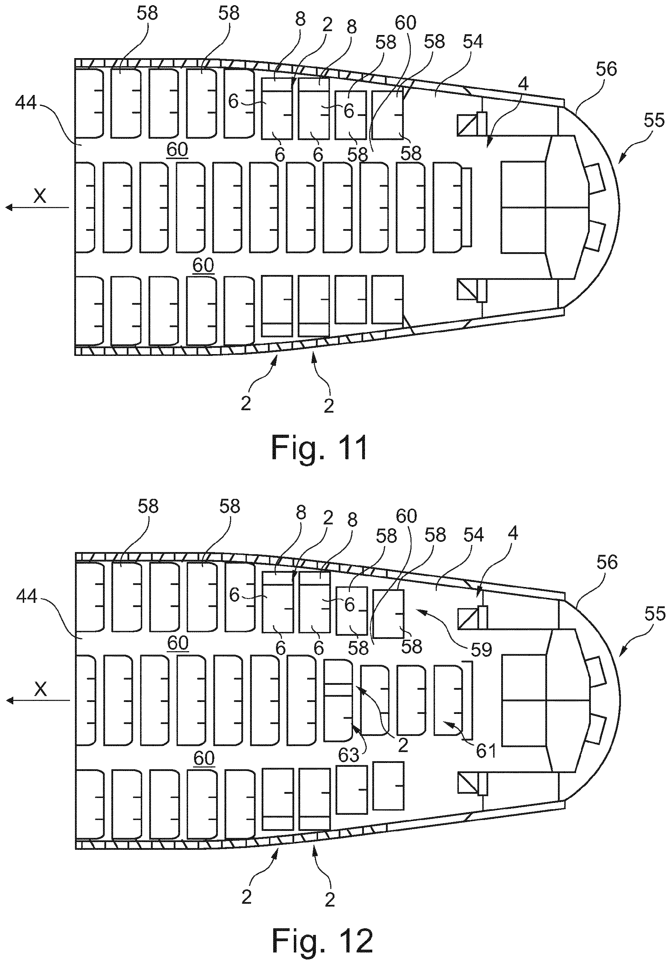

Fig. 11 demonstriert beispielhaft die Position zweier hintereinander befindlicher Sitzanordnungen 2 mit jeweils zwei ersten Sitzen 6 und einem zweiten Sitz 8 in einem Heckkonus 54 an einem Heck 55 als ein axiales Ende eines Flugzeugrumpfs 56, in dem der verfügbare Bauraum entgegen einer Längsrichtung x schmaler wird. Die zweiten Sitze 8 schließen direkt an die Kabineninnenverkleidung an. In Längsrichtung x vor den Sitzanordnungen 2 sind zahlreiche Passagiersitze 58 in Dreier-Reihen angeordnet, wobei jeder Passagiersitz 58 einem ersten Sitz 6 entsprechen kann. Hinter den Sitzanordnungen 2 sind beispielhaft zwei Reihen mit jeweils zwei Passagiersitzen 58 angeordnet. Der von den Sitzanordnungen 2 eingenommene Raum reicht nicht für drei herkömmliche Passagiersitze 58 aus, die nebeneinander angeordnet sind. Allerdings würde der Bauraum bei zwei Passagiersitzen 58 eine relativ große Lücke zu der Kabineninnenverkleidung verursachen. Diese Lücke wird jeweils durch einen zweiten Sitz 8 geschlossen. Besonders vorteilhaft liegt kein seitlicher Versatz zwischen den zu einem Gang 60 gerichteten Sitzen vor, so dass alle Sitze 6 und 58 bündig an den Gang 60 anschließen.

Fig. 12 zeigt eine etwas modifizierte Variante der Kabine 4, bei der mehrere lateral äußere Sitzreihen 59, die jeweils Passagiersitze 58 aufweisen, lateral etwas nach innen versetzt sind. Die Kabine 4 weist zudem mittlere Sitzreihen zwischen den Gängen 60 auf. Die überwiegende Anzahl ist mit vier Passagiersitzen 58 bestückt. Im Bereich der lateral nach innen versetzten Sitzreihen 59 sind drei mittlere Sitzreihen 61 angeordnet, die jeweils drei herkömmliche Passagiersitze 58 aufweisen. Eine hier Zwischenreihe genannte Sitzreihe 63, die zwischen den Sitzreihen 61 und den davor liegenden Sitzreihen mit vier Passagiersitzen 58 angeordnet ist, weist indes zwei Passagiersitze 58 auf, sowie eine Sitzanordnung 2, die in die Zwischenreihe 63 eingesetzt ist. Denkbar wäre, diese Zwischenreihen 63 oder jede andere Sitzreihe mit einer darin integrierten Sitzanordnung 2 auch an anderen Bereichen der Kabine 4 anzuordnen.

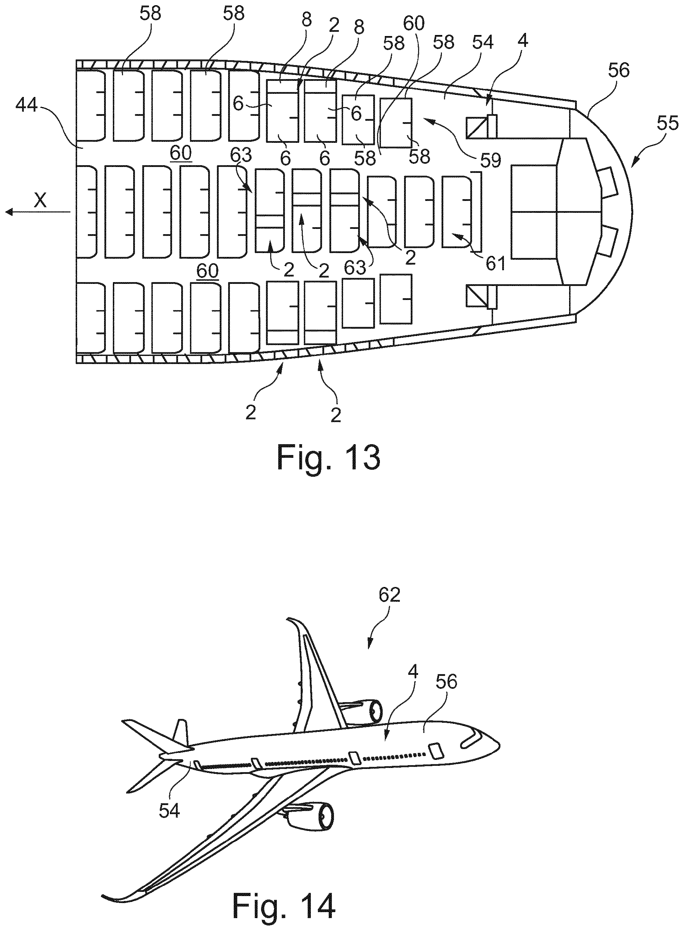

In Fig. 13 werden mehrere Zwischenreihen 63 gezeigt, die mit einer Sitzanordnung 2 ausgestattet sind. Die Platzierung der Sitzanordnung 2 ist variabel, so dass etwa aufeinander folgende Zwischenreihen 63 jeweils an unterschiedlichen Positionen eine Sitzanordnung 2 aufweisen.

Schließlich zeigt Fig. 14 ein Flugzeug 62 mit dem Flugzeugrumpf 56, dem Hecckonus 54 und der Passagierkabine 4, in der mindestens eine erfindungsgemäße Sitzanordnung 2 vorgesehen ist.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Sitzanordnung
- 4: Passagierkabine
- 5: Kabinenfenster
- 6: erster Sitz
- 7: Kabineninnenverkleidung
- 8: zweiter Sitz
- 10: erste Sitzfläche
- 12: erste Rückenlehne
- 14: zweite Sitzfläche
- 16: zweite Rückenlehne
- 18: Sitzflächenverlängerung
- 20: Sitzgurt
- 22: Baby
- 24: Befestigungseinrichtung
- 26: Trennfuge
- 28: Trennfuge
- 29: Ausschnitt
- 30: Armlehne
- 32: Rückseite (der Sitzflächenverlängerung)
- 34: Notebook
- 36: Becherhalter
- 38: Stromanschluss
- 40: induktive Ladeeinrichtung
- 42: Rückseite (der zweiten Rückenlehne)
- 44: Kabinenfußboden
- 46: Sitzgurt
- 48: Gurtschloss
- 50: wannenförmige Vertiefung
- 52: Eingabegerät
- 54: Heckkonus
- 55: Heck
- 56: Flugzeugrumpf
- 58: Passagiersitz
- 59: äußere Sitzreihe
- 60: Gang
- 61: mittlere Sitzreihe
- 62: Flugzeug
- 63: Sitzreihe/Zwischenreihe

## Patentansprüche

1. Multifunktionale Sitzanordnung (2) für eine Passagierkabine eines Fahrzeugs, aufweisend:
- mindestens einen ersten Sitz (6) und
- einen zweiten Sitz (8), der lateral direkt neben dem mindestens einen ersten Sitz (6) angeordnet ist,
wobei der mindestens eine erste Sitz (6) eine erste Sitzfläche (10) und eine erste Rückenlehne (12) aufweist,
wobei der zweite Sitz (8) eine zweite Sitzfläche (14), eine zweite Rückenlehne (16) und eine schwenkbar an der zweiten Sitzfläche (14) gelagerte, von der zweiten Rückenlehne (16) entgegengesetzt angeordnete Sitzflächenverlängerung (18) aufweist,
wobei die Sitzflächenverlängerung (18) zumindest dazu ausgebildet ist, bedarfsweise in eine zu der zweiten Sitzfläche (14) einen Winkel von mindestens 90° einschließende Position verschwenkt zu werden, in der sie der zweiten Rückenlehne (16) zugewandt ist,
wobei die erste Sitzfläche (10) und die zweite Sitzfläche (14) dieselbe Sitzhöhe aufweisen,
wobei der zweite Sitz (8) eine geringere Breite aufweist als der mindestens eine erste Sitz (6), und
wobei die Sitzflächenverlängerung (18) in mehreren Schwenkpositionen lösbar verriegelbar ist.

2. Sitzanordnung (2) nach Anspruch 1,
wobei die zweite Rückenlehne (16) und/oder die zweite Sitzflächenverlängerung (18) dazu ausgebildet ist, bündig auf die zweite Sitzfläche (14) geklappt zu werden.

3. Sitzanordnung (2) nach Anspruch 2,
wobei die zweite Rückenlehne (16) bzw. die Sitzflächenverlängerung (18) an einer Rückseite (32, 42) eine ebene Auflagefläche mit einer rutschhemmenden Beschichtung aufweist.

4. Sitzanordnung (2) nach Anspruch 2 oder 3,
wobei die zweite Rückenlehne (16) bzw. die Sitzflächenverlängerung (18) an einer Rückseite (32, 42) mindestens eine Vertiefung (36, 50) zur Aufnahme eines Gegenstands aufweist.

5. Sitzanordnung (2) nach einem der Ansprüche 2 bis 4,
wobei die zweite Rückenlehne (16) bzw. die Sitzflächenverlängerung (18) an einer Rückseite (32, 42) mindestens eine mit einem mobilen Endgerät (34) koppelbare elektronische Einrichtung (38, 40, 52) aufweist.

6. Sitzanordnung (2) nach einem der vorhergehenden Ansprüche,
wobei eine klappbar gelagerte Armlehne (30) an dem zweiten Sitz (8) und/oder an dem direkt benachbarten ersten Sitz (6) integriert ist, und
wobei die Armlehne (30) dazu ausgebildet ist, bündig in eine Kontur der zweiten Rückenlehne (16) und/oder der ersten Rückenlehne (12) des direkt benachbarten ersten Sitzes (6) geklappt zu werden.

7. Sitzanordnung (2) nach einem der vorhergehenden Ansprüche,
wobei der zweite Sitz (8) eine Befestigungseinrichtung (24) zum Haltern eines zusätzlichen Kindersitzes aufweist, der auf die zweite Sitzfläche (14) auflegbar ist.

8. Sitzanordnung (2) nach einem der vorhergehenden Ansprüche,
wobei die zweite Rückenlehne (16) niedriger als die erste Rückenlehne (12) ist.

9. Sitzanordnung (2) nach einem der vorhergehenden Ansprüche,
wobei der zweite Sitz (8) und der direkt benachbarte erste Sitz (6) keine Lücke zueinander einschließen.

10. Passagierkabine (4), aufweisend:
- einen Kabinenfußboden (44),
- eine Kabineninnenverkleidung (7),
- mehrere Passagiersitze (58), die auf dem Kabinenfußboden (44) angeordnet sind, und
- mindestens eine Sitzanordnung (2) nach einem der Ansprüche 1 bis 9.

11. Flugzeug (62), aufweisend einen Flugzeugrumpf (56) und eine darin ausgebildete Passagierkabine (4) nach Anspruch 10.

12. Flugzeug (62) nach Anspruch 11,
wobei das Flugzeug (62) an zumindest einem axialen Ende (55) des Flugzeugrumpfs (56) zumindest bereichsweise eine Konusform aufweist, und
wobei die mindestens eine Sitzanordnung (2) an dem betreffenden axialen Ende (55) angeordnet ist.

13. Flugzeug (62) nach Anspruch 11 oder 12,
wobei sich die Sitzanordnung (2) von einem Gang (60) zu der Kabineninnenverkleidung (7) erstreckt, und
wobei der zu dem Gang (60) gerichtete erste Sitz (6) bündig mit dem Gang (60) abschließt.

14. Flugzeug (62) nach einem der Ansprüche 11 bis 13,
wobei die Passagierkabine (4) mindestens eine zwischen zwei Gängen (60) angeordnete Sitzreihe (63) aufweist, die mindestens eine Sitzanordnung (2) besitzt.

## Claims

1. Multifunctional seat arrangement (2) for a passenger cabin of a vehicle, comprising:
- at least one first seat (6) and
- one second seat (8) which is arranged laterally directly adjacent to the at least one first seat (6), wherein the at least one first seat (6) has a first seat surface (10) and a first backrest (12),
wherein the second seat (8) has a second seat surface (14), a second backrest (16) and a seat surface extension (18) which is pivotably mounted on the second seat surface (14) and which is arranged opposite the second backrest (16),
wherein the seat surface extension (18) is at least configured to be pivoted if required into a position which encloses an angle of at least 90° relative to the second seat surface (14) and in which it faces the second backrest (16),
wherein the first seat surface (10) and the second seat surface (14) have the same seat height,
wherein the second seat (8) has a smaller width than the at least one first seat (6), and
wherein the seat surface extension (18) is releasably lockable in a plurality of pivoted positions.

2. Seat arrangement (2) according to Claim 1,
wherein the second backrest (16) and/or the second seat surface extension (18) is configured to be folded flush onto the second seat surface (14).

3. Seat arrangement (2) according to Claim 2,
wherein the second backrest (16) and/or the seat surface extension (18) has, on a rear side (32, 42), a planar bearing surface with a non-slip coating.

4. Seat arrangement (2) according to Claim 2 or 3,
wherein the second backrest (16) and/or the seat surface extension (18) has, on a rear side (32, 42), at least one recess (36, 50) for receiving an article.

5. Seat arrangement (2) according to one of Claims 2 to 4,
wherein the second backrest (16) and/or the seat surface extension (18) has, on a rear side (32, 42), at least one electronic device (38, 40, 52) which is couplable to a mobile device (34).

6. Seat arrangement (2) according to one of the preceding claims,
wherein a foldably mounted armrest (30) is integrated on the second seat (8) and/or on the directly adjacent first seat (6), and
wherein the armrest (30) is configured to be folded flush into a contour of the second backrest (16) and/or of the first backrest (12) of the directly adjacent first seat (6).

7. Seat arrangement (2) according to one of the preceding claims,
wherein the second seat (8) has a fastening device (24) for retaining an additional child seat which is positionable onto the second seat surface (14).

8. Seat arrangement (2) according to one of the preceding claims,
wherein the second backrest (16) is lower than the first backrest (12).

9. Seat arrangement (2) according to one of the preceding claims,
wherein the second seat (8) and the directly adjacent first seat (6) do not enclose a gap relative to one another.

10. Passenger cabin (4) comprising:
- a cabin floor (44),
- a cabin interior trim (7),
- a plurality of passenger seats (58) which are arranged on the cabin floor (44), and
- at least one seat arrangement (2) according to one of Claims 1 to 9.

11. Aircraft (62) comprising an aircraft fuselage (56) and a passenger cabin (4) according to Claim 10 which is configured therein.

12. Aircraft (62) according to Claim 11,
wherein the aircraft (62) has a conical shape at at least one axial end (55) of the aircraft fuselage (56) at least in certain regions, and
wherein the at least one seat arrangement (2) is arranged at the relevant axial end (55).

13. Aircraft (62) according to Claim 11 or 12,
wherein the seat arrangement (2) extends from an aisle (60) to the cabin interior trim (7), and
wherein the first seat (6) which is oriented towards the aisle (60) terminates flush with the aisle (60).

14. Aircraft (62) according to one of Claims 11 to 13,
wherein the passenger cabin (4) has at least one seat row (63) which is arranged between two aisles (60) and which has at least one seat arrangement (2).

## Revendications

1. Arrangement de siège (2) multifonction pour une cabine de passagers d'un véhicule, comprenant :
- au moins un premier siège (6) et
- un deuxième siège (8) qui est disposé latéralement directement à côté de l'au moins un premier siège (6), l'au moins un premier siège (6) possédant une première surface d'assise (10) et un premier dossier (12),
le deuxième siège (8) possédant une deuxième surface d'assise (14), un deuxième dossier (16) ainsi qu'une rallonge de surface d'assise (18) supportée de manière pivotante à la deuxième surface d'assise (14) et disposée à l'opposé du deuxième dossier (16),
la rallonge de surface d'assise (18) étant au moins configurée pour être pivotée, suivant le besoin, dans une position incluant un angle d'au moins 90° par rapport à la deuxième surface d'assise (14), dans laquelle elle fait face au deuxième dossier (16),
la première surface d'assise (10) et la deuxième surface d'assise (14) présentant la même hauteur,
le deuxième siège (8) présente une largeur plus faible que l'au moins un premier siège (6), et
la rallonge de surface d'assise (18) pouvant être verrouillée de manière amovible dans plusieurs positions de pivotement.

2. Arrangement de siège (2) selon la revendication 1, le deuxième dossier (16) et/ou la deuxième rallonge de surface d'assise (18) étant configuré pour être rabattu à fleur sur la deuxième surface d'assise (14).

3. Arrangement de siège (2) selon la revendication 2, le deuxième dossier (16) et/ou la rallonge de surface d'assise (18) possédant, au niveau d'un côté arrière (32, 42), une surface d'appui plane pourvue d'un revêtement antidérapant.

4. Arrangement de siège (2) selon la revendication 2 ou 3, le deuxième dossier (16) et/ou la rallonge de surface d'assise (18) possédant, au niveau d'un côté arrière (32, 42), au moins une cavité (36, 50) destinée à accueillir un objet.

5. Arrangement de siège (2) selon l'une des revendications 2 à 4, le deuxième dossier (16) et/ou la rallonge de surface d'assise (18) possédant, au niveau d'un côté arrière (32, 42), au moins un dispositif électronique (38, 40, 52) qui peut être connecté à un terminal mobile (34).

6. Arrangement de siège (2) selon l'une des revendications précédentes,
un accoudoir (30) supporté rabattable étant intégré au deuxième siège (8) et/ou au premier siège (6) directement voisin, et
l'accoudoir (30) étant configuré pour être rabattu à fleur dans un contour du deuxième dossier (16) et/ou du premier dossier (12) du premier siège (6) directement voisin.

7. Arrangement de siège (2) selon l'une des revendications précédentes, le deuxième siège (8) possédant un dispositif de fixation (24) destiné à maintenir un siège pour enfant supplémentaire, qui peut être déposé sur la deuxième surface d'assise (14).

8. Arrangement de siège (2) selon l'une des revendications précédentes, le deuxième dossier (16) étant plus bas que le premier dossier (12).

9. Arrangement de siège (2) selon l'une des revendications précédentes, le deuxième siège (8) et le premier siège (6) directement voisin n'incluant aucun écart entre eux.

10. Cabine de passagers (4), comprenant :
- un plancher de cabine (44),
- un habillage intérieur de cabine (7),
- plusieurs sièges de passager (58) qui sont disposés sur le plancher de cabine (44), et
- au moins un arrangement de siège (2) selon l'une des revendications 1 à 9.

11. Aéronef (62), comprenant un fuselage d'aéronef (56) et une cabine de passagers (4) selon la revendication 10 formée dans celui-ci.

12. Aéronef (62) selon la revendication 11,
l'aéronef (62) possédant au moins dans certaines zones une forme conique au moins à une extrémité axiale (55) du fuselage d'aéronef (56), et
l'au moins un arrangement de siège (2) étant disposé à l'extrémité axiale (55) concernée.

13. Aéronef (62) selon la revendication 11 ou 12,
l'arrangement de siège (2) s'étendant d'une allée (60) vers l'habillage intérieur de cabine (7), et
le premier siège (6), orienté vers l'allée (60), se terminant à fleur de l'allée (60).

14. Aéronef (62) selon l'une des revendications 11 à 13, la cabine de passagers (4) possédant au moins une rangée de sièges (63) disposée entre deux allées (60), laquelle possède l'au moins un arrangement de siège (2).
